# EUROPEAN PATENT SPECIFICATION

(11) **EP 2 647 236 B1**
(45) Date of publication and mention of the grant of the patent: **29.06.2016**
(21) Application number: 10785065.3
(22) Date of filing: 30.11.2010
(51) Int. Cl.: H04W 16/14

(54) **RESOURCE ALLOCATION IN DYNAMIC SPECTRUM REFARMING**
RESSOURCENZUWEISUNG BEI DYNAMISCHER SPEKTRENWIEDERVERWENDUNG
ATTRIBUTION DE RESSOURCES EN RÉAMÉNAGEMENT DYNAMIQUE DU SPECTRE

(43) Date of publication of application: 09.10.2013
(73) Proprietor: Nokia Solutions and Networks Oy, 02610 Espoo (FI)
(72) Inventor: KAASALAINEN, Janne Veikko, FI-01150 Söderkulla (FI); MOILANEN, Jani Matti Johannes, FI-00200 Helsinki (FI); SAILY, Mikko, FI-04130 Sipoo (FI)
(74) Representative: Borgström, Markus
(86) International application number: PCT/EP2010/068549
(87) International publication number: WO 2012/072119

(56) References cited:
- WO-A1-02/23758
- WO-A1-2010/091713
- WO-A2-2008/081309

## Description

The present invention relates to resource allocation in dynamic spectrum refarming.

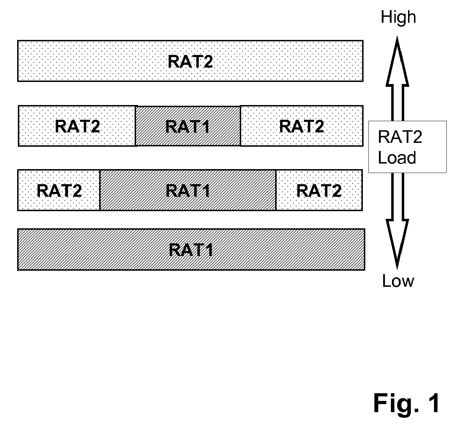

In dynamic spectrum refarming (DSR), two radio access technologies (RATs) share same spectrum and the spectrum shares are assigned based on cell load as illustrated in Fig. 1. In case the cell load of a communication system of a radio access technology 2 (RAT2) is low in a particular cell of a cellular communications network system, a communication system of a radio access technology 1 (RAT1) which shares spectrum blocks (areas) with the RAT2 communication system may use all of the shared spectrum blocks (i.e. all of the bandwidth shared between the communication systems). With an increasing cell load of the RAT2 communication system, the shared spectrum blocks should be assigned more and more to the RAT2 communication system.

Main motivations for dynamic spectrum refarming are
- smooth migration to newer technologies (no need to worry when is the cross-over point to do refarming, or what is the right capacity balance),
- higher user throughputs & lower call blocking (bandwidth optimized according to instantaneous load), and
- power saving (putting to sleep excess capacity).

An example of different RATs are GSM (global system for mobile communication) and LTE (long term evolution) systems, but the same principles of spectrum refarming can be applied of other technologies, such as GSM and HSPA (high speed packet access), where different transmit bandwidths can be supported, e.g. 4.8, 4.6, 4.2, 3.8 MHz.

Interference statistics in LTE change when radio resources from shared spectrum are allocated in GSM, and vice versa. These interference statistics can be described as inter-system interference (IS-IF). Currently shared frequency resources cannot be taken into account in resource schedulers as a priori information. Link adaptation and power control by mobile measurements and base station channel sounding techniques will likely notice quality problems due to increased interference, and this will be reflected in a degraded pay-load data rate and/or increased transmit power, thus limiting the system performance.

Manual allocation of radio resources can be very problematic in a shared spectrum area between GSM and LTE systems. Network O&M (operation and maintenance) becomes complicated and without a dedicated methodology frequency planning and run-time resource allocation is likely to become close to impossible when frequent adaptation in resource sharing and load balancing are needed.

A mechanism called "Dynamic Frequency and Channel Allocation (DFCA)" uses flexible frequency and timeslot allocation based on interference statistics measured from the network. When network load changes, DFCA resource allocation can adapt to changing interference load and find the best radio resources. However, DFCA is not aware of the IS-IF and therefore resource allocation will be problematic from the shared spectrum based on a background interference matrix (BIM).

Yet another problem arises if the spectrum shares differ between neighboring cells. GSM has significantly higher power spectral density (∼13.5dB higher in case of 5MHz LTE) and therefore it will cause severe IS-IF towards LTE.

According to the prior art, the background interference matrix may be used for conditional interference estimation between cells of a cellular communications network system. Moreover, a multi-layer approach is proposed which introduces BIM connected between systems.

Furthermore, in the prior art exchange of cell specific load information over X2 interface (intra-LTE scenario) or S1 interface (inter-RAT scenario) is discussed, but mainly considers mobility load balancing and load reporting, which does not solve the problem of operating a shared spectrum during network run-time operation.

The WO 2010/091713 A1 relates to the field of radio resource allocation between fourth-generation Evolved Universal Terrestrial Radio Access Networks and second-generation radio access networks according to the GSM/EDGE standard. More particularly, a method and mechanism are proposed which allow GERAN and LTE radio resource management to share the same spectrum allocation in both co-channels and adjacent channels.

The present invention aims at solving the above problem and providing a run-time reconfiguration of resource allocation when dynamic spectrum refarming is employed.

This is achieved by the method according to independent Claim 1, the apparatus according to independent Claim 7 and the computer program product according to independent Claim 13. Further advantageous embodiments are defined by the appended dependent Claims.

According to an exemplary disclosure of the invention, a carrier/resource allocation method in an inter-RAT inter-working scenario is proposed, where inter-system interference can be taken into account when defining a mobile allocation (MA) list based on mobile measurements and base station channel sounding measurements.

With the present invention, an inter-RAT capacity can be maximized, inter-RAT load can be balanced based on a service level requirement and inter-system interference can be minimized.

In the following the invention will be described by way of embodiments thereof taking into account the accompanying drawings, in which:
Fig. 1 shows a schematic diagram illustrating an example of dynamic spectrum refarming, where allocated bandwidth between systems can be configured depending on the load.
Fig. 2 shows a schematic block diagram illustrating an arrangement of control units according to an embodiment of the invention.
Fig. 3 shows a schematic diagram illustrating an example of dynamic spectrum refarming with multiple MA-lists, where different configurations of inter-RAT shared spectrum operation are supported with specifically tailored MA lists considering also the inter-system interference, according to an embodiment of the invention.
Fig. 4 shows a schematic diagram illustrating an example of dynamic spectrum refarming with multiple MA-lists using carrier aggregation, according to an embodiment of the invention.
Fig. 5 shows a flowchart illustrating a resource allocation method according to an embodiment of the invention.

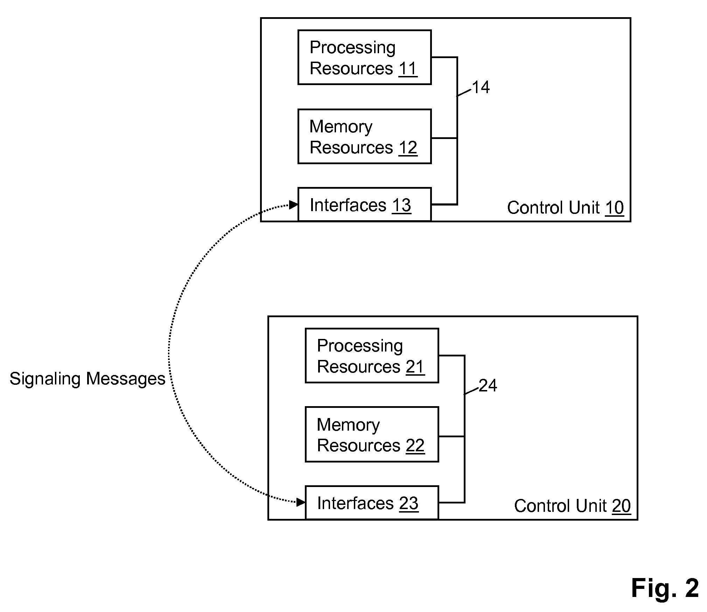

As a preliminary matter before exploring details of various implementations, reference is made to Fig. 2 for illustrating a simplified block diagram of various electronic devices that are suitable for use in practicing the exemplary embodiments of this invention.

A control unit 10 of the first communication system includes processing resources 11, memory resources 12 that may store a program, and interfaces 13 which may include a suitable radio frequency transceiver coupled to one or more antennas for bidirectional wireless communications over one or more wireless links. The processing resources 11, memory resources 12 and interfaces 13 may be coupled by a bus 14.

The control unit 10 may function as part of network elements providing access for user equipments to the first communication system. According to an embodiment of the invention, the control unit 10 may function as part of eNBs.

Similarly, a control unit 20 of the second communication system includes processing resources 21, memory resources 22 that may store a program, and interfaces 23 which may include a suitable radio frequency transceiver coupled to one or more antennas for bidirectional wireless communications over one or more wireless links. The processing resources 21, memory resources 22 and interfaces 23 may be coupled by a bus 24.

The control unit 20 may function as part of network elements providing access for user equipments to the second communication system. According to an embodiment of the invention, the control unit 20 may function as part of BSCs (base station controllers).

The interfaces 13 and 23 may be used for signaling messages between the control units 10 and 20.

The terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and printed electrical connections, as well as by the use of electromagnetic energy, such as electromagnetic energy having wavelengths in the radio frequency region, the microwave region and the optical (both visible and invisible) region, as non-limiting examples.

Programs stored by the memory resources 12, 23 are assumed to include program instructions that, when executed by the associated processing resources, enable the electronic device to operate in accordance with the exemplary embodiments of this invention, as detailed below. Inherent in the processing resources 11, 21 is a clock to enable synchronism among the various apparatus for transmissions and receptions within the appropriate time intervals and slots required, as the scheduling grants and the granted resources/subframes are time dependent. The transceivers of the interfaces 13, 23 include both transmitter and receiver, and inherent in each is a modulator/demodulator commonly known as a modem. The interfaces 13, 23 may also include a modem to facilitate communication over (hardwire) links.

In general, the exemplary embodiments of this invention may be implemented by computer software stored in the memory resources 12, 22 and executable by the processing resources 11, 21 of the control units 10, 20, or by hardware, or by a combination of software and/or firmware and hardware in any or all of the devices shown.

The memory resources 12, 22 may be of any type suitable to the local technical environment and may be implemented using any suitable data storage technology, such as semiconductor-based memory devices, magnetic memory devices and systems, optical memory devices and systems, fixed memory and removable memory. The processing resources 11, 21 may be of any type suitable to the local technical environment, and may include one or more of general purpose computers, special purpose computers, microprocessors, digital signal processors (DSPs) and processors based on a multi-core processor architecture, as non-limiting examples.

According to an embodiment of the invention, a carrier/resource allocation method in an inter-RAT inter-working scenario is proposed. It is to be noted that the first and second communication systems or first and second radio access technologies are not limited to LTE / HSPA and GSM.

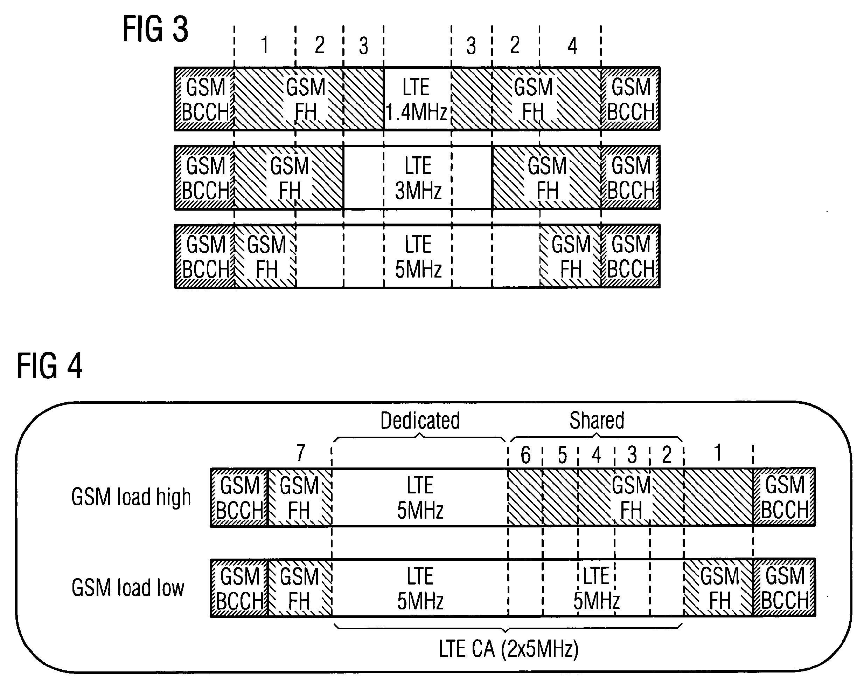

Mobile allocation (MA) lists are constructed for each shared spectrum configuration. An example of shared spectrum configurations is shown in Fig. 3. A shared spectrum configuration means a configuration between dedicated and shared spectrum areas. A dedicated spectrum area is an area of bandwidth (or frequency or resources or carriers) which is used by a particular communication system only. For example, the area indicated by "1" and "4" in Fig. 3 is a dedicated spectrum area for a GSM system (second communication system). A shared spectrum area is an area of bandwidth (or frequency or resources or carriers) which is shared between communication system, e.g. an LTE system (first communication system) and the GSM system. For example, the areas indicated by "2" and "3" in Fig. 3 are shared spectrum areas.

Fig. 3 shows three shared spectrum configurations for a particular cell of a cellular communications network system. In the lower configuration all of the shared spectrum area is used by the LTE system. In the configuration in the middle, 1.6MHz of the shared spectrum area is used by the LTE system and the rest by the GSM system. In the upper configuration, all the shared spectrum area is used by the GSM system.

Depending on a load of the cell of the GSM system, the configurations may be dynamically changed. That is, when the load of the GSM system is high, mobile allocation list(s) that operate on the shared spectrum area are enabled, and when the load of the GSM system is low, mobile allocation list(s) that operate on the shared spectrum area are disabled.

Enabling in this context means that the first communication system has stopped using a shared carrier and new second communication system (e.g. GSM) calls are allowed in the shared carrier. Similarly, disabling in this context means that new second communication system (e.g. GSM) calls are not allowed in a shared carrier and the first communication system is allowed to start using the shared carrier after all ongoing calls have finished or have been handed over to another mobile allocation list.

According to an embodiment, in the carrier/resource allocation method in the inter-RAT inter-working scenario, inter-system interference (IS-IF) may be taken into account when defining a mobile allocation (MA) list based on mobile measurements and base station channel sounding measurements.

IS-IF from LTE towards GSM may be estimated directly from GSM measurements by scaling the measurements with LTE power spectral density and frame utilization. In particular, this approach is applicable for co-located deployment in which LTE and GSM base stations are co-located.

Moreover, usage of a mobile allocation list that operates on the shared spectrum area is allowed only for user equipments (UEs) of the second communication system that have a high enough carrier to interference ratio, considering also inter-system interference. Users located in a cell edge of the second communication system are allocated mainly to frequency resources dedicated to the second communication system.

In the following it is explained in an example, how mobile allocation lists can be disabled or enabled to adjust the inter-RAT spectrum configuration between dedicated and shared spectrum areas. By using DFCA this can be done almost in real-time and without reconfiguration of the GSM network. Fig. 3 presents an example of carrier (resource) allocation with 4 mobile allocation (MA) lists corresponding to areas "1" to "4" (referred to as MA lists 1 to 4) with following illustrative scenarios:
- MA lists 1&4 are in use, if LTE BW <= 5.0MHz
- MA list 2 is in use, if LTE BW <= 3.0MHz
- MA list 3 is in use, if LTE BW <= 1.4MHz

That is, if the bandwidth (BW) of the first communication system (e.g. LTE) is up to 1.4MHZ, which means that the load of the second communication system is high (or the load of the first communication system is low), all the MA lists 1 to 4 are enabled, i.e. in use. If the bandwidth of the first communication system is up to 3.0MHz as shown in the configuration in the middle in Fig. 3, the MA lists 1, 2 and 4 are enabled. If the bandwidth of the first communication system is up to 5MHz, which means that the load of the second communication system is low (or the load of the first communication system is high), only the MA lists 1 and 4 corresponding to the dedicated spectrum area are enabled.

In the example of Fig. 3 the MA list 2 can be disabled in a GSM cell when the LTE bandwidth needs to be extended from 3 MHz to 5 MHz to support increased load or service level requirements. Similarly, the MA lists 2 and 3 can be jointly enabled or disabled depending on the load.

Further, it is possible to define an MA list consisting of frequencies, which are selected from the MA list 1 and optionally from the MA list 2 or the MA list 3, or both MA lists 2 and 3. Combination of frequencies from the dedicated spectrum area and the shared spectrum area can be done when the IS-IF interference is expected to be low, for example.

Fig. 4 shows an example of dynamic spectrum refarming with multiple MA lists using carrier aggregation in the first communication system.

In this example in Fig. 4 MA lists 1 and 7 consist of dedicated GSM frequency resources. A shared spectrum area consists of five MA lists 2 to 6, e.g. ∼1MHz each, which are derived from the shared spectrum area. The shared spectrum area in dynamic spectrum refarming is operated using carrier aggregation (CA). Depending on the frame utilization in LTE, each MA list located in the shared spectrum area can be included or excluded to the mobile allocation in GSM and LTE.

As shown in Fig. 4, in the lower configuration GSM cell load is low (or LTE cell load is high) and the LTE system uses two 5MHz spectrum blocks of which one block is the shared spectrum area, which are combined using carrier aggregation mechanisms. The GSM system uses the MA list 1 and/or the MA list 7 (i.e. the MA lists corresponding to the dedicated spectrum area) for resource allocation.

In the upper configuration in Fig. 4, the GSM cell load is high (or the LTE cell load is low), and the GSM system may use the MA lists 1 to 7 for resource allocation.

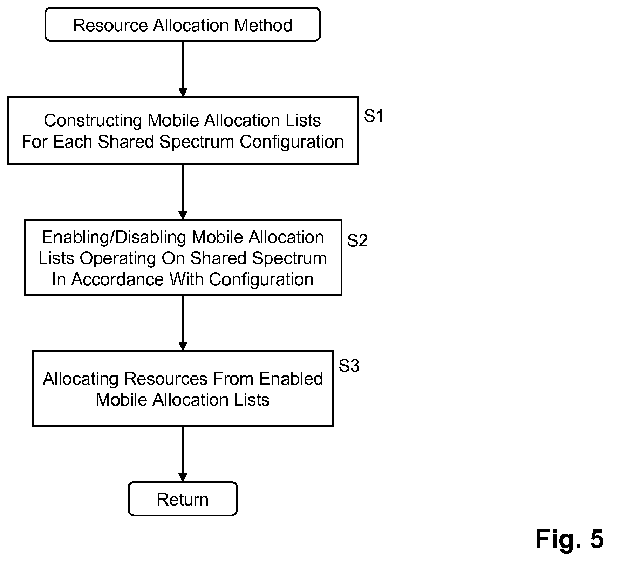

Fig. 5 shows a flow chart illustrating a resource allocation method according to an embodiment of the invention.

In step S1, mobile allocation lists for configurations of shared spectrum areas between a first communication system of a first radio access technology and a second communication system of a second radio access technology are constructed. For example, according to Fig. 3 MA lists 1 to 4 may be constructed, and according to Fig. 4 MA lists 1 to 7 may be constructed.

In step S2, depending on a load of the second communication system, at least one of the mobile allocation lists, which operates on the shared spectrum blocks, may be enabled or disabled to obtain a configuration of the configurations. For example, as shown in Fig. 3, the MA lists 1 and 4 are enabled and the MA lists 2 and 3 are disabled to obtain the lower configuration. And as shown in Fig. 4, the MA lists 1 and 7 are enabled and the MA lists 2 to 6 are disabled to obtain the lower configuration of Fig. 4, for example.

In step S3, resources are allocated for each connection with the second communication system by selecting the resources from at least one of the mobile allocation lists which is enabled. For example, referring to Fig. 3, when the MA lists 1 to 4 are enabled (upper configuration), resources may be selected there from and a single mobile allocation list including the selected resources may be constructed and allocated for each connection.

Resources corresponding to the shared spectrum area may be allocated based on an inter-system interference which may be estimated with respect to the shared spectrum area from measurements of the second communication system by scaling the measurements with a power spectral density and frame utilization of the first communication system. Alternatively or in addition, measurements regarding inter-system interference with respect to the shared spectrum area may be conducted by the first communication system and transmitted in a signaling message to the second communication system. The measurements may include mobile station measurements and base station channel sounding measurements.

The resources corresponding to the shared spectrum area may be allocated, based on the inter-system interference, to a connection of a user equipment with the second communication system, which has a high carrier to interference ratio. Resources corresponding to the dedicated spectrum area may be allocated to a connection of a user equipment with the second communication system, which is located in a cell edge of the second communication system.

When the configuration is changed to another configuration of the configurations (e.g. the configuration in the middle is changed to the lower configuration in Fig. 3), connections on resources selected from a mobile allocation list of the mobile allocation lists which is disabled, may be handed over to resources selected from a mobile allocation list of the mobile allocation lists which remains enabled when the configuration is changed. For example, referring to Fig. 3, a connection based on resources selected from the MA list 2 is handed over to resources selected only from the MA lists 1 and 4 when the configuration in the middle is changed to the lower configuration.

According to an implementation example of the present invention, in order to support shared spectrum with DFCA, IS-IF can be taken into account in the computation of a background interference matrix (BIM). Radio resources used by each connection can be defined based on the used MA list, MAIO (mobile allocation index offset) and TDMA (time division multiple access) frame number. Co-channel and adjacent channel interference occurs constantly over a whole burst when a cellular communication network is synchronized and the radio links use the same MA list and MAIO combination. However, on the LTE system side this assumption does not hold for on-going connections if it is tried to control IS-IF.

Therefore, BIM construction and scaling in a portion of the BIM which corresponds to the shared spectrum area can be based on measuring a carrier to interference ratio and compensating it with known LTE frame utilization and power spectral density. This compensates the overall carrier to interference (C/I) towards the neighboring cells included in the latest measurement report and normalizes corresponding C/I values listed in a single layer BIM table of incoming interference. As described above, there may be some signaling support between GSM and LTE systems regarding inter-system interference measurements.

During cellular communication network run-time each MA list can be disabled or enabled to adjust the inter-RAT spectrum configuration between dedicated and shared spectrum areas as described above. This can be done by handing over all existing calls (connections) via intra-cell HO (handover) to another MA list, or via inter-cell HO to another cell (an MA list of another cell). New arriving calls are not accepted to the MA list(s) which are disabled (and cleaned up) when the inter-RAT spectrum configuration is changed.

CIR calculation can be enhanced to include the interference from the LTE system. A DFCA RRM (radio resource management) algorithm may use real time radio channel usage information to determine the actual C/I. This may be done after calculating potential C/Is for incoming interference propagating from neighboring cells and the shared spectrum area. The BIM is used to derive a C/I estimate for nearby cells and the shared spectrum area of nearby cells that have not been included in a MS (mobile station) measurement report. CIR from the LTE system enables run-time MA list enabling, disabling or clearing by HO on call by call basis instead of total MA list enabling or disabling for all calls in the cell.

Preferably, spectrum refarming can be based on inter-system load balancing, where more resources can be given to the LTE system when GSM system traffic load allows. This provides more optimum performance for new technology thus improving technology roll-out and reducing dimensioning effort. Also it is worth to note that the proposed method does not mandate common RRM to operate admission control of the shared spectrum area.

According to an implementation example of the invention, DFCA is used to allocate an MA list per connection with the second communication system, and frequency hopping can be adopted. MA lists are constructed for each shared spectrum configuration, for example as shown in Figs. 3 and 4. A single MA list may be constructed from second communication system (e.g. GSM) dedicated frequency resources, shared spectrum frequency resources, and a combination of second communication system dedicated and shared spectrum frequency resources. Definition of an MA list is based on mobile measurements, where GSM MA list allocation is based on measurements from GSM mobile stations and shared spectrum allocation is based on GSM, LTE or both GSM and LTE measurements. In co-located deployment LTE IS-IF from LTE towards GSM can be estimated directly from GSM measurements by scaling the measurements with LTE power spectral density and frame utilization.

Regarding the different MA list construction options of constructing the single MA list from second communication system (e.g. GSM) dedicated frequency resources, shared spectrum frequency resources, and a combination of second communication system dedicated and shared spectrum frequency resources as described above, the following allocation options are given.

That is, dedicated frequency resources may be allocated to mobile stations (user equipments, connections) which are located close to cell edges to avoid severe IS-IF, e.g. mobile stations which need high DL/UL (downlink/uplink) power are not using the shared spectrum area.

In the case of constructing the single MA list from shared spectrum frequency resources, mobile stations are using radio resources only from the shared spectrum area. A significant benefit is that in case of triggering a DSR (dynamic spectrum refarming) event, a fast MA list clean up can be performed, and a resource clean up for adjusting the shared spectrum area is only impacting mobile stations which are already sharing the spectrum. Another benefit is that DFCA algorithm at GSM system side does not need to use C/I estimates from shared radio resources between RATs, thus better C/I estimate may be available.

In the case of constructing the single MA list from a combination of GSM dedicated and shared spectrum frequency resources, mobile stations are allocated radio resources from both GSM dedicated and shared spectrum resources. The benefit is that both RATs gain interference diversity from GSM frequency hopping. A radio block comprises frames with IS-IF and non-IS-IF characteristics because both dedicated and shared spectrum resources are used.

The proposed resource allocation method will benefit significantly from an inter-system load reporting function, where cell specific load information is exchanged between neighbour eNBs over an X2 interface (intra-LTE scenario) or S1 interface (inter-RAT scenario). For the inter-RAT scenario the load information comprises a cell capacity class value when mapping cell load capacities and exchanging load information. Also a capacity value will be available, e.g. a UL/DL available capacity for load balancing as percentage of total cell capacity. A DSR procedure may be started when a source cell informs a target cell about the load and provides a triggering cause for a shared spectrum configuration change (e.g. a load balancing related request). The source cell may consider responses from the target cell before executing the planned change of its shared spectrum allocation.

According to an embodiment of the invention, CIR is defined in the presence of IS-IF for frequency hopping resource allocation, and MA and hopping lists are defined in shared spectrum area.

With the present invention, the following benefits can be achieved.

With DFCA a run-time reconfiguration of dynamic spectrum refarming can be done without having to reset a base transceiver station (BTS) of the second communication system.

Carrier allocation with run-time IS-IF control becomes autonomous compared to conventional frequency hopping.

The BIM is not required to be a multi-layer BIM, but can be accommodated to cover IS-IF in a shared spectrum area.

Carrier allocation and dynamic spectrum refarming based on predefined MA lists works even if a shared spectrum split of a neighboring LTE cell is not known. GSM has higher spectral density and frequency hopping will provide interference diversity against IS-IF.

Since neighboring cells can use spectrum configuration together with IS-IF control, degradation of LTE performance, which may be introduced due to IS-IF when spectrum configuration is adopted, can be avoided.

According to an aspect of the invention, an apparatus of a second communication system of a second radio access technology, such as the control unit 20 shown in Fig. 2, for example, comprises enabling and disabling means for, depending on a load of the second communication system, enabling or disabling at least one of mobile allocation lists constructed for configurations of shared spectrum areas between a first communication system of a first radio access technology and the second communication system, which operates on the shared spectrum blocks, to obtain a configuration of the configurations, and allocating means for allocating resources for each connection with the second communication system by selecting the resources from at least one of the mobile allocation lists which is enabled.

At least one of the mobile allocation lists may contain resources corresponding to a dedicated spectrum area which is dedicated to the second communication system, and at least one of the mobile allocation lists may contain resources corresponding to a shared spectrum area which is shared between the first and second communication systems.

The apparatus may further comprise estimating means for estimating inter-system interference with respect to the shared spectrum area from measurements of the second communication system by scaling the measurements with a power spectral density and frame utilization of the first communication system, wherein the allocating means may allocate the resources corresponding to the shared spectrum area based on the inter-system interference.

The apparatus may further comprise receiving means for receiving measurements regarding inter-system interference with respect to the shared spectrum area from the first communication system in a signaling message, and the allocating means may allocate the resources corresponding to the shared spectrum area based on the inter-system interference.

The allocating means may allocate the resources corresponding to the shared spectrum area, based on the inter-system interference, to a connection of a user equipment with the second communication system, which has a high carrier to interference ratio.

The allocating means may allocate the resources corresponding to the dedicated spectrum area to a connection of a user equipment with the second communication system, which is located in a cell edge of the second communication system.

The apparatus may further comprise means for handing over connections on resources selected from a mobile allocation list of the mobile allocation lists which is disabled when the configuration is changed to another configuration of the configurations, to resources selected from a mobile allocation list of the mobile allocation lists which remains enabled when the configuration is changed.

According to an aspect of the invention, an apparatus of the first communication system of the first radio access technology, such as the control unit 10 shown in Fig. 2, for example, comprises estimating means for estimating inter-system interference with respect to a shared spectrum area which is shared between the first communication system and the second communication system of the second radio access technology, from measurements of the first communication system, and sending means for sending information on the inter-system interference to the second communication system in a signaling message.

According to an embodiment of the invention, mobile allocation lists are constructed for configurations of shared spectrum areas between a first communication system of a first radio access technology and a second communication system of a second radio access technology. Depending on a load of the second communication system, at least one of the mobile allocation lists, which operates on the shared spectrum blocks, is enabled or disabled to obtain a configuration of the configurations, and resources for each connection with the second communication system are allocated by selecting the resources from at least one of the mobile allocation lists which is enabled.

It is to be understood that the above description is illustrative of the invention and is not to be construed as limiting the invention. Various modifications and applications may occur to those skilled in the art without departing from the scope of the invention as defined by the appended claims.

## Claims

1. A method provided at a control unit (10,20) comprising:
constructing (S1) mobile allocation lists for each configuration of a plurality of configurations of shared spectrum areas between a first communication system of a first radio access technology and a second communication system of a second radio access technology,
depending on a load of the second communication system, changing the configuration into another configuration of the plurality of configurations by enabling or disabling (S2) at least one of the mobile allocation lists, which contains resources corresponding to a shared spectrum area which is shared between the first and second communication systems, to obtain the other configuration,
allocating (S3) resources for each connection with the second communication system by selecting resources from at least one of the mobile allocation lists which is enabled, and
handing over connections on resources selected from a mobile allocation list of the mobile allocation lists which is disabled when the configuration is changed to the other configuration, to resources selected from a mobile allocation list of the mobile allocation lists which remains enabled when the configuration is changed.

2. The method of claim 1,
wherein at least one of the mobile allocation lists contains resources corresponding to a dedicated spectrum area which is dedicated to the second communication system.

3. The method of claim 1 or 2, comprising:
estimating inter-system interference with respect to the shared spectrum area from measurements of the second communication system by scaling the measurements with a power spectral density and frame utilization of the first communication system,
wherein the resources corresponding to the shared spectrum area are allocated based on the inter-system interference.

4. The method of any one of claims 1 to 3, comprising:
receiving measurements regarding inter-system interference with respect to the shared spectrum area from the first communication system in a signaling message,
wherein the resources corresponding to the shared spectrum area are allocated based on the inter-system interference.

5. The method of claim 3 or 4, wherein the resources corresponding to the shared spectrum area are allocated, based on the inter-system interference, to a connection of a user equipment with the second communication system, which has a high carrier to interference ratio.

6. The method of any one of claims 1 to 5, wherein the resources corresponding to the dedicated spectrum area are allocated to a connection of a user equipment with the second communication system, which is located in a cell edge of the second communication system.

7. An apparatus comprising:
a control unit (20) of a second communication system of a second radio access technology, wherein the control unit is configured to,
depending on a load of the second communication system, change a configuration of a plurality of configurations of shared spectrum areas between a first communication system of a first radio access technology and the second communication system into another configuration of the plurality of configurations by enabling or disabling at least one of mobile allocation lists constructed for each configuration of the plurality of configurations, which contains resources corresponding to a shared spectrum area which is shared between the first and second communication systems, to obtain the other configuration,
allocate resources for each connection with the second communication system by selecting resources from at least one of the mobile allocation lists which is enabled, and
hand over connections on resources selected from a mobile allocation list of the mobile allocation lists which is disabled when the configuration is changed to the other configuration, to resources selected from a mobile allocation list of the mobile allocation lists which remains enabled when the configuration is changed.

8. The apparatus of claim 7,
wherein at least one of the mobile allocation lists contains resources corresponding to a dedicated spectrum area which is dedicated to the second communication system.

9. The apparatus of claim 7 or 8, wherein the control unit is configured to
estimate inter-system interference with respect to the shared spectrum area from measurements of the second communication system by scaling the measurements with a power spectral density and frame utilization of the first communication system, and
allocate the resources corresponding to the shared spectrum area based on the inter-system interference.

10. The apparatus of any one of claims 7 to 9, wherein the control unit is configured to
receive measurements regarding inter-system interference with respect to the shared spectrum area from the first communication system in a signaling message, and
allocate the resources corresponding to the shared spectrum area based on the inter-system interference.

11. The apparatus of claim 9 or 10, wherein the control unit is configured to allocate the resources corresponding to the shared spectrum area, based on the inter-system interference, to a connection of a user equipment with the second communication system, which has a high carrier to interference ratio.

12. The apparatus of any one of claims 7 to 11, wherein the control unit is configured to allocate the resources corresponding to the dedicated spectrum area to a connection of a user equipment with the second communication system, which is located in a cell edge of the second communication system.

13. A computer program product including a program for a processing device, comprising software code portions for performing the steps of any one of claims 1 to 6 when the program is run on the processing device.

14. The computer program product according to claim 13, wherein the computer program product comprises a computer-readable medium on which the software code portions are stored.

15. The computer program product according to claim 13, wherein the program is directly loadable into an internal memory of the processing device.

## Patentansprüche

1. Verfahren, das an einer Steuereinheit (10, 20) bereitgestellt ist, umfassend:
Aufbauen (S1) mobiler Zuweisungslisten für jede Konfiguration von mehreren Konfigurationen von gemeinsam genutzten Spektrumsbereichen zwischen einem ersten Kommunikationssystem einer ersten Funkzugangstechnologie und einem zweiten Kommunikationssystem einer zweiten Funkzugangstechnologie,
von einer Belastung des zweiten Kommunikationssystems abhängiges Ändern der Konfiguration zu einer anderen Konfiguration der mehreren Konfigurationen durch Aktivieren oder Deaktivieren (S2) zumindest einer der mobilen Zuweisungslisten, die Ressourcen enthält, welche einem gemeinsam genutzten Spektrumsbereich entsprechen, der durch das erste und das zweite Kommunikationssystem gemeinsam genutzt wird, um die andere Konfiguration zu erhalten,
Zuweisen (S3) von Ressourcen für jede Verbindung mit dem zweiten Kommunikationssystem durch Wählen von Ressourcen aus zumindest einer der mobilen Zuweisungslisten, die aktiviert ist, und
Weitergeben von Verbindungen auf Ressourcen, die aus einer mobilen Zuweisungsliste der mobilen Zuweisungslisten, welche deaktiviert wird, wenn die Konfiguration zu der anderen Konfiguration geändert wird, gewählt sind, zu Ressourcen, die aus einer mobilen Zuweisungsliste der mobilen Zuweisungslisten, welche aktiviert bleibt, wenn die Konfiguration geändert wird, gewählt werden.

2. Verfahren nach Anspruch 1,
wobei zumindest eine der mobilen Zuweisungslisten Ressourcen enthält, die einem fest zugeordneten Spektrumsbereich entsprechen, der dem zweiten Kommunikationssystem zugeordnet ist.

3. Verfahren nach Anspruch 1 oder 2, umfassend:
Schätzen einer Interferenz unter den Systemen in Bezug auf den gemeinsam genutzten Spektrumsbereich aus Messungen des zweiten Kommunikationssystems durch Skalieren der Messungen mit einer spektralen Leistungsdichte und einer Frame-Auslastung des ersten Kommunikationssystems,
wobei die Ressourcen, die dem gemeinsam genutzten Spektrumsbereich entsprechen, auf Basis der Interferenz unter den Systemen zugewiesen werden.

4. Verfahren nach einem der Ansprüche 1 bis 3, umfassend:
Erhalten von Messungen im Hinblick auf die Interferenz unter den Systemen in Bezug auf den gemeinsam genutzten Spektrumsbereich von dem ersten Kommunikationssystem in einer Signalisierungsnachricht,
wobei die Ressourcen, die dem gemeinsam genutzten Spektrumsbereich entsprechen, auf Basis der Interferenz unter den Systemen zugewiesen werden.

5. Verfahren nach Anspruch 3 oder 4, wobei die Ressourcen, die dem gemeinsam genutzten Spektrumsbereich entsprechen, auf Basis der Interferenz unter den Systemen einer Verbindung eines Benutzergeräts mit dem zweiten Kommunikationssystem, die ein hohes Träger-zu-Interferenz-Verhältnis aufweist, zugewiesen werden.

6. Verfahren nach einem der Ansprüche 1 bis 5, wobei die Ressourcen, die dem fest zugeordneten Spektrumsbereich entsprechen, einer Verbindung eines Benutzergeräts mit dem zweiten Kommunikationssystem, die sich an einem Zellenrand des zweiten Kommunikationssystems befindet, zugewiesen werden.

7. Vorrichtung, umfassend:
eine Steuereinheit (20) eines zweiten Kommunikationssystems einer zweiten Funkzugangstechnologie, wobei die Steuereinheit dazu ausgebildet ist,
abhängig von einer Belastung des zweiten Kommunikationssystems eine Konfiguration von mehreren Konfigurationen von gemeinsam genutzten Spektrumsbereichen zwischen einem ersten Kommunikationssystem einer ersten Funkzugangstechnologie und dem zweiten Kommunikationssystem zu einer anderen Konfiguration der mehreren Konfigurationen zu ändern, indem zumindest eine von mobilen Zuweisungslisten, die für jede Konfiguration der mehreren Konfigurationen aufgebaut sind, welche Ressourcen enthält, die einem gemeinsam genutzten Spektrumsbereich entsprechen, der von dem ersten und dem zweiten Kommunikationssystem gemeinsam genutzt wird, aktiviert oder deaktiviert wird, um die andere Konfiguration zu erhalten,
Ressourcen für jede Verbindung mit dem zweiten Kommunikationssystem zuzuweisen, indem Ressourcen aus zumindest einer der mobilen Zuweisungslisten, die aktiviert ist, gewählt werden, und
Verbindungen auf Ressourcen, die aus einer mobilen Zuweisungsliste der mobilen Zuweisungslisten, welche deaktiviert wird, wenn die Konfiguration zu der anderen Konfiguration geändert wird, gewählt sind, zu anderen Ressourcen weiterzugeben, die aus einer mobilen Zuweisungsliste der mobilen Zuweisungslisten, welche aktiviert bleibt, wenn die Konfiguration geändert wird, gewählt werden.

8. Vorrichtung nach Anspruch 7,
wobei zumindest eine der mobilen Zuweisungslisten Ressourcen enthält, die einem fest zugeordneten Spektrumsbereich entsprechen, der dem zweiten Kommunikationssystem zugeordnet ist.

9. Vorrichtung nach Anspruch 7 oder 8, wobei die Steuereinheit dazu ausgebildet ist,
eine Interferenz unter den Systemen in Bezug auf den gemeinsam genutzten Spektrumsbereich aus Messungen des zweiten Kommunikationssystems durch Skalieren der Messungen mit einer spektralen Leistungsdichte und einer Frame-Auslastung des ersten Kommunikationssystems zu schätzen, und
die Ressourcen, die dem gemeinsam genutzten Spektrumsbereich entsprechen, auf Basis der Interferenz unter den Systemen zuzuweisen.

10. Vorrichtung nach einem der Ansprüche 7 bis 9, wobei die Steuereinheit dazu ausgebildet ist,
Messungen im Hinblick auf die Interferenz unter den Systemen in Bezug auf den gemeinsam genutzten Spektrumsbereich von dem ersten Kommunikationssystem in einer Signalisierungsnachricht zu erhalten, und
die Ressourcen, die dem gemeinsam genutzten Spektrumsbereich entsprechen, auf Basis der Interferenz unter den Systemen zuzuweisen.

11. Vorrichtung nach Anspruch 9 oder 10, wobei die Steuereinheit dazu ausgebildet ist, die Ressourcen, die dem gemeinsam genutzten Spektrumsbereich entsprechen, auf Basis der Interferenz unter den Systemen einer Verbindung eines Benutzergeräts mit dem zweiten Kommunikationssystem, die ein hohes Träger-zu-Interferenz-Verhältnis aufweist, zuzuweisen.

12. Vorrichtung nach einem der Ansprüche 7 bis 11, wobei die Steuereinheit dazu ausgebildet ist, die Ressourcen, die dem fest zugeordneten Spektrumsbereich entsprechen, einer Verbindung eines Benutzergeräts mit dem zweiten Kommunikationssystem, die sich an einem Zellenrand des zweiten Kommunikationssystems befindet, zuzuweisen.

13. Computerprogrammprodukt, das ein Programm für eine Verarbeitungsvorrichtung enthält, umfassend Softwarecodeabschnitte zur Durchführung der Schritte eines der Ansprüche 1 bis 6, wenn das Programm an der Verarbeitungsvorrichtung ausgeführt wird.

14. Computerprogrammprodukt nach Anspruch 13, wobei das Computerprogrammprodukt ein computerlesbares Medium umfasst, worauf die Softwarecodeabschnitte gespeichert sind.

15. Computerprogrammprodukt nach Anspruch 13, wobei das Programm direkt in einen internen Speicher der Verarbeitungsvorrichtung geladen werden kann.

## Revendications

1. Procédé fourni au niveau d'une unité de commande (10, 20) comprenant :
la construction (S1) de listes d'attributions mobiles pour chaque configuration d'une pluralité de configurations de zones de spectre partagées entre un premier système de communication d'une première technologie d'accès radio et un second système de communication d'une seconde technologie d'accès radio,
en fonction d'une charge du second système de communication, le changement de la configuration en une autre configuration de la pluralité de configurations en activant ou désactivant (S2) au moins une des listes d'attributions mobiles, qui contient des ressources correspondant à une zone de spectre partagée qui est partagée entre les premier et second systèmes de communication, pour obtenir l'autre configuration,
l'attribution (S3) de ressources pour chaque connexion au second système de communication en sélectionnant les ressources à partir d'au moins une des listes d'attributions mobiles qui est activée, et
le transfert de connexions sur des ressources sélectionnées à partir d'une liste d'attributions mobile des listes d'attributions mobiles qui est désactivée quand la configuration est changée en l'autre configuration, vers des ressources sélectionnées à partir d'une liste d'attributions mobile des listes d'attributions mobiles qui reste activée quand la configuration est changée.

2. Procédé selon la revendication 1,
dans lequel au moins une des listes d'attributions mobiles contient des ressources correspondant à une zone de spectre dédiée qui est dédiée au second système de communication.

3. Procédé selon la revendication 1 ou 2, comprenant :
l'estimation d'une interférence inter-système par rapport à la zone de spectre partagée à partir de mesures du second système de communication en mettant en corrélation les mesures avec une utilisation de trame et de densité spectrale de puissance du premier système de communication,
dans lequel les ressources correspondant à la zone de spectre
partagée sont attribuées sur la base de l'interférence inter-système.

4. Procédé selon l'une quelconque des revendications 1 à 3, comprenant :
la réception de mesures concernant l'interférence inter-système par rapport à la zone spectrale partagée à partir du premier système de communication dans un message de signalisation,
dans lequel les ressources correspondant à la zone de spectre partagée sont attribuées sur la base de l'interférence inter-système.

5. Procédé selon la revendication 3 ou 4, dans lequel les ressources correspondant à la zone de spectre partagée sont attribuées, sur la base de l'interférence inter-système, à une connexion d'un équipement utilisateur au second système de communication, qui a un rapport porteuse sur interférence élevé.

6. Procédé selon l'une quelconque des revendications 1 à 5, dans lequel les ressources correspondant à la zone de spectre dédiée sont attribuées à une connexion d'un équipement utilisateur au second système de communication, qui se situe dans un bord de cellule du second système de communication.

7. Appareil comprenant :
une unité de commande (20) d'un second système de communication d'une seconde technologie d'accès radio, dans lequel l'unité de commande est configurée pour,
en fonction d'une charge du second système de communication, changer une configuration d'une pluralité de configurations de zones de spectre partagées entre un premier système de communication d'une première technologie d'accès radio et le second système de communication en une autre configuration de la pluralité de configurations en activant ou désactivant au moins une des listes d'attributions mobiles construites pour chaque configuration de la pluralité de configurations, qui contient des ressources correspondant à une zone de spectre partagée qui est partagée entre les premier et second systèmes de communication, pour obtenir l'autre configuration,
attribuer des ressources pour chaque connexion au second système de communication en sélectionnant les ressources à partir d'au moins une des listes d'attributions mobiles qui est activée, et
transférer des connexions sur des ressources sélectionnées à partir d'une liste d'attributions mobile des listes d'attributions mobiles qui est désactivée quand la configuration est changée en l'autre configuration, vers des ressources sélectionnées à partir d'une liste d'attributions mobile des listes d'attributions mobiles qui reste activée quand la configuration est changée.

8. Appareil selon la revendication 7,
dans lequel au moins une des listes d'attributions mobiles contient des ressources correspondant à une zone de spectre dédiée qui est dédiée au second système de communication.

9. Appareil selon la revendication 7 ou 8, dans lequel l'unité de commande est configurée pour
estimer une interférence inter-système par rapport à la zone de spectre partagée à partir de mesures du second système de communication en mettant en corrélation les mesures avec une utilisation de trame et de densité spectrale de puissance du premier système de communication, et
attribuer les ressources correspondant à la zone de spectre partagée sur la base de l'interférence inter-système.

10. Appareil selon l'une quelconque des revendications 7 à 9, dans lequel l'unité de commande est configurée pour
recevoir des mesures concernant l'interférence inter-système par rapport à la zone spectrale partagée à partir du premier système de communication dans un message de signalisation, et
attribuer les ressources correspondant à la zone de spectre partagée sur la base de l'interférence inter-système.

11. Appareil selon la revendication 9 ou 10, dans lequel l'unité de commande est configurée pour attribuer les ressources correspondant à la zone de spectre partagée, sur la base de l'interférence inter-système, à une connexion d'un équipement utilisateur au second système de communication, qui a un rapport porteuse sur interférence élevé.

12. Appareil selon l'une quelconque des revendications 7 à 11, dans lequel l'unité de commande est configurée pour attribuer les ressources correspondant à la zone de spectre dédiée à une connexion d'un équipement utilisateur au second système de communication, qui se situe dans un bord de cellule du second système de communication.

13. Produit de programme informatique comportant un programme pour un dispositif de traitement, comprenant des parties de code de logiciel pour réaliser les étapes selon l'une quelconque des revendications 1 à 6 quand le programme est exécuté sur le dispositif de traitement.

14. Produit de programme informatique selon la revendication 13, dans lequel le produit de programme informatique comprend un support lisible par ordinateur sur lequel sont stockées les parties de code de logiciel.

15. Produit de programme informatique selon la revendication 13, dans lequel le programme peut être directement chargé dans une mémoire interne du dispositif de traitement.
